# EUROPEAN PATENT APPLICATION

(11) **EP 3 860 048 A1**
(43) Date of publication of application: **04.08.2021**
(21) Application number: 20305086.9
(22) Date of filing: 31.01.2020
(51) Int. Cl.: H04L 12/24, H04L 12/721

(54) **METHOD FOR INSTANTIATING A NETWORK SERVICE AND CORRESPONDING APPARATUS**

(71) Applicant: InterDigital CE Patent Holdings, 75017 Paris (FR)
(72) Inventor: De Vito, Mario, 35576 Cesson-Sevigne (FR); Onno, Stephane, 35576 Cesson-Sevigne (FR)
(74) Representative: Interdigital

(57) **Abstract**

Instantiating a Network Service described by a Forwarding Graph comprising Virtual Network Functions, VNF instances, which are interconnected via communication links. This includes splitting the Forwarding Graph into n VNF Elementary Graphs, VNF EGs. Each of the VNF EGs for a VNF Instance includes routing information for forwarding, by that VNF instance and to another VNF instance, packets output by that VNF instance based on a packet class identifier included in the packet. Each of the VNF EGs is transmitted to the corresponding VNF instance for that VNF EG. Each of the VNF instances, when outputting a packet handled by it, then transmits the packet to a next VNF instance based on the packet class identifier included in the packet.

## Description

### FIELD

The present disclosure generally relates to the field of Network Function Virtualization (NFV) and in particular to Virtual Network Functions (VNFs).

### BACKGROUND

Any background information described herein is intended to introduce the reader to various aspects of art, which may be related to the present embodiments that are described below. This discussion is believed to be helpful in providing the reader with background information to facilitate a better understanding of the various aspects of the present disclosure. Accordingly, it should be understood that these statements are to be read in this light.

In the context of Network Function Virtualization, network functions are implemented as Virtualized Network Functions that are executed on servers in Containers and/or Virtual Machines (VMs). A Network Service (NS) is defined as a set of VNFs interconnected through Virtual Links (VLs). The NS implements a complex network function, in which the VNFs comprising the NS communicate with each other via the VLs.

A so-called VNF Forwarding Graph (VNFFG) describe how the VNFs in an NS form a chain; the output data (result) of one VNF is the input data for another VNF. Packets take a route within the NS from one VNF to another, dependent on their content. So-called Forwarders are required per compute node (being the computing machine hosting one or more VNFs) which process packet traffic on the compute node, that is, they inspect packet content and depending on packet content steer the packet to a specific VNF. The Forwarders may contribute significantly to the overall packet transmission time and may cause important delays.

It is therefore desirable to provide a method and device for improved data communication between VNFs in an NS.

### SUMMARY

According to one aspect of the present disclosure, there is provided a method of instantiating a Network Service described by a Forwarding Graph comprising Virtual Network Functions, VNF instances. The method comprises splitting the forwarding graph into n VNF elementary graphs, one per VNF instance, wherein each of the elementary graphs for a VNF instance comprises routing information for forwarding, by the VNF instance, packets output by the VNF instance based on a packet class identifier comprised in the packets. The method further comprises: transmitting each of the VNF elementary graphs to a corresponding VNF instance for that elementary graph. Further, the method comprises: each of the VNF instances, when the VNF instance outputs a packet processed by the VNF instance, transmitting, via one of the communication links, the packet to a next VNF instance based on the packet class identifier comprised in the packet.

According to a further aspect of the method of instantiating a Network Service, one of the VNF instances implements a packet classifier function, the packet classifier function inserting, into packets input into the Network Service, the packet class identifier, based on a packet property.

According to a further aspect of the method of instantiating a Network Service, the packet property is at least one of a source address, a source port number, a destination address, a destination port number, a protocol identifier, a logical network interface identifier, a physical network interface identifier, a Central Processing Unit thread or process identifier, a Graphical Processing Unit thread or process identifier.

According to a further aspect of the method of instantiating a Network Service, the packet property is determined by the VNF instances based on the routing information.

According to a further aspect of the method of instantiating a Network Service, the destination address is any of an Internet Protocol address, a Media Access Control address, a reference to an encapsulation transport format, a reference to an encapsulation protocol.

According to a further aspect of the method of instantiating a Network Service, the encapsulation transport format is Virtual Extensible Local Area Network, VxLAN.

According to a further aspect of the method of instantiating a Network Service, the encapsulation protocol is Generic Routing Encapsulation, GRE.

According to a further aspect of the method of instantiating a Network Service, the packet class identifier is inserted in one of: a Type of Service field in an IPv4 header; a flow label field in an IPv6 header; a physical network interface field, a logical network interface field, a Central Processing Unit thread or a process field, a Graphical Processing Unit thread or a process field.

The present principles also relate to a device for instantiating a Network Service described by a forwarding graph comprinsing Virtual Network Functions, VNF instances, interconnected via communication links. The device comprises at least one processor configured to split the forwarding graph into n VNF elementary graphs, one per VNF instance, wherein each of the elementary graphs for a VNF instance comprises routing information for forwarding, by the VNF instance, packets output by the VNF instance based on a packet class identifier comprised in the packets. The at least one processor is further configured to transmit each of the VNF elementary graphs to a corresponding VNF instance for that elementary graph. Each of the VNF instances, when the VNF instance outputs a packet processed by the VNF instance, is further configured to transmit, via one of the communication links, the packet to a next VNF instance based on the packet class identifier comprised in the packet.

According to a further aspect of the device, one of the VNF instances is configured to implement a packet classifier function, the packet classifier function inserting, into packets input into the Network Service the packet class identifier, based on a packet property.

According to a further aspect of the device, the packet property is at least one of a source address, a source port number, a destination address, a destination port number, upper layer protocol identifier, physical network interface identifier, a logical network interface identifier, a Central Processing Unit thread or process identifier, a Graphical Processing Unit thread or process identifier.

According to a further aspect of the device, the destination address is any of an Internet Protocol address, a Media Access Control address, a reference to an encapsulation transport format, a reference to an encapsulation protocol.

According to a further aspect of the device, the encapsulation transport format is Virtual Extensible Local Area Network, VxLAN.

According to a further aspect of the device, the encapsulation protocol is Generic Routing Encapsulation, GRE.

According to a further aspect of the device, the packet class identifier is inserted in one of: a Type of Service field in an IPv4 header, a flow label field in an IPv6 header, physical network interface field, a logical network interface field, a Central Processing Unit thread or a process field, a Graphical Processing Unit thread or a process field.

### BRIEF DESCRIPTION OF THE DRAWINGS

More advantages of the present disclosure will appear through the description of particular, non-restricting embodiments. To describe the way the advantages of the present disclosure can be obtained, particular descriptions of the present principles are rendered by reference to specific embodiments thereof which are illustrated in the appended drawings. The drawings depict exemplary embodiments of the disclosure and are therefore not to be considered as limiting its scope. The embodiments described can be combined to form particular advantageous embodiments. In the following figures, items with same reference numbers as items already described in a previous figure will not be described again to avoid unnecessary obscuring the disclosure. The embodiments will be described with reference to the following drawings in which:
**Figure 1** is a block diagram of an environment wherein the present principles can be applied.
**Figure 2** is an embodiment of a Network Service **200** according to the present principles.
**Figure 3** is a Forwarding Graph corresponding to NS **200,** and illustrates the VNFs of figure 2 as nodes, and the communication links between the VNFs as edges.
**Figure 4** depicts an Orchestrator that processes a Forwarding Graph of a Network Service (e.g., NS **200**) and that outputs n Elementary Graphs or configuration data destined for each individual VNF in the NS.
**Figure 5** is an exemplary deployment of VNFs in a network including a core network and an edge network.
**Figure 6** is a different exemplary deployment of VNFs in a network including a core- and edge network.
**Figure 7** is a flow chart of an embodiment of the method for instantiating a network service described by a forwarding graph according to the present principles.
**Figure 8** is an embodiment of a device suitable for implementing the embodiments per the principles of the present disclosure.

It should be understood that the drawings are for purposes of illustrating the concepts of the disclosure and are not necessarily the only possible configuration for illustrating the disclosure.

### DETAILED DESCRIPTION

The present description illustrates the principles of the present disclosure. It will thus be appreciated that those skilled in the art will be able to devise various arrangements that, although not explicitly described or shown herein, embody the principles of the disclosure and are included within its spirit and scope.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

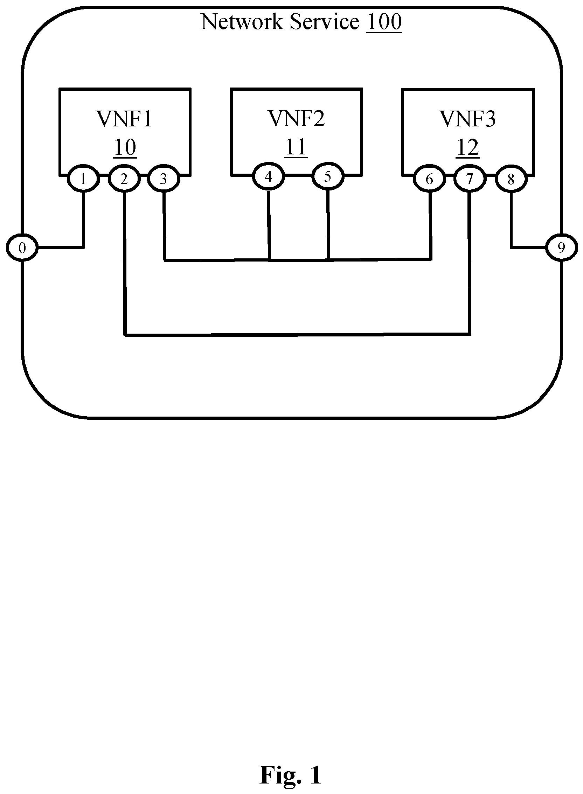

**Figure 1** is a block diagram of an environment wherein the present principles can be applied. An exemplary Network Service **100** includes three VNFs, VNF1 with reference **10,** VNF2 with reference **11,** and VNF3 with reference **12.** Of course, the skilled person will readily acknowledge that a network service may include any number of VNFs. In the exemplary NS **100,** packets are input on connection point (CP) **CP0,** and output at connection point **CP9.** A connection point may correspond to a network interface. Inside the NS **100,** the VNFs are linked to the NS's input CP, to the NS's output CP, and to each other, via Virtual Links (VLs). A first VL, VL1, connects NS input **CP0** to VNF1 (**10**) **CP1**. A second VL, VL2, connects **CP2** of VNF1 (**10**) to **CP7** of VNF3 (**12**). A third VL, VL3, connects **CP3** of VNF1 (**10**) either to **CP4** of VNF2 (**11**) or to **CP6** of VNF3. A fourth VL, VL4, connects **CP5** of VNF2 (**11**) to **CP6** of VNF3 (12). As an example, there are three routes defined according to packet types/contents, which are referred here to 'red', 'green' and 'blue' packets although Fig.1 is in black and white. Red packets coming in at **CP0** are processed by VNF1 (**10**) and resulting packets that are output by VNF1 (**10**) on **CP2** should be input into VNF3 (**12**) on **CP7** for further processing, and resulting packets should be output on **CP8** to be output by the NS on **CP9**. Blue packets coming in at **CP0** should be input to VNF1 (**10**) on **CP1** for processing by VNF1, results should be output on VNF1 (**10**) **CP3,** to be input on **CP6** of VNF3 (**12**) for further processing by VNF3, and results of handling of these by VNF3 (**12**) that are output on VNF3 (**12**) **CP8** should be handed over to NS output **CP9**. Green packets coming in at NS **100 CP0** should be input to VNF1 (**10**) **CP1,** results output on VNF1 (**10**) that are output on **CP3** should be handed over to VNF2 (**11**) input **CP4,** and results of VNF2 treatment, coming out of VNF2 (**11**) CP5, should be handed over to VNF3 (**12**) input **CP6,** and results of VNF3 (**12**) treatment of green packets, output on VNF3 (**12**) **CP8,** should be transmitted to NS **100** output **CP9**.

It can thus be observed that inside the NS **100,** the VNFs are 'chained' in a 'graph'. The routing of packets is done by a function called 'Forwarder'. The Forwarder inspects a Packet Class Identifier (PCI), which is added by a packet classifier function that may be instantiated in a VNF, which role is to add packet classifiers according to policy (e.g., 'red', 'green', or 'blue' policy). An index is further added which represents the packet position in the graph. This index gets an initial value when entering the NS and is decremented by each VNF on its route. The index makes the forwarding process 'stateful', i.e., the VNF update the 'state' (decrement the index) but ignores where to send the packet to. The Forwarders have this knowledge provided that the packet 'state' is set properly by the VNFs.

With the above described solution, a Forwarder is required per compute node (i.e., the computing machine hosting one or more VNFs). Forwarders may contribute significantly to packet transmission time between VNFs. The Forwarders must be configured and updated prior to deployment of VNFs. In addition, when a Network Service is implemented on infrastructures where a virtual link passes through a physical switch (router), such switch should support the chaining protocol as described above, thereby requiring specific hardware and/or software. In particular, these switches may need to support the Network Service Header (NHS) protocol.

Embodiments are described here that provide solutions to at least some of the above problems, including the state updating done by the VNFs and the added communication delays caused by the Forwarders, as well as the specific hardware requirement for any physical switches in routes between VNFs. A solution is provided herein where the index/state, as well as the Forwarders, are no longer required. Without the index field, the routing depends solely on the packet class. Any switches involved in the supporting infrastructure are no longer implied in the VNF chaining and may be basic items.

According to an embodiment, there is provided a new way of instantiating a Forwarding Graph (FG). The FG is distributed as configuration data among VNFs part of an NS, so that each VNF 'knows' to which VNF a packet of a given class is to be routed. The route of a packet is then solely determined by its class identifier, and does no longer depend on state information carried by an 'index' field; the system is therefore said to be stateless.

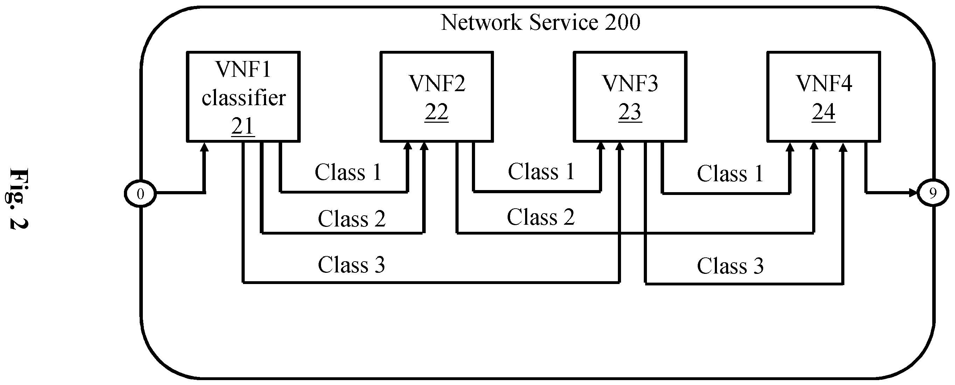

**Figure 2** is an embodiment of an exemplary Network Service **200** according to the present principles. The exemplary NS **200** includes four VNFs, VNF1 with reference **21,** VNF2 with reference **22,** VNF3 with reference **23** and VNF4 with reference **24**. VNF1 **21** includes a so-called Classifier function; it inserts, in the packets input into NS **200** at CP0, a (Packet) Class Identifier (CI or PCI) based on a packet property. For example, the packet property may be a source (IP) address and/or source port number, or a destination (IP) address and/or a destination port number, an identifier of a communication protocol used ('protocol identifier'), for example an identifier of the User Datagram Protocol (UDP) or of the Transmission Control Protocol (TCP), for the IP protocol, a Central Processing Unit thread or process identifier, a Graphical Processing Unit thread or process identifier. Accoridng to an embodiment, the destination address is any of an Internet Protocol address, a Media Access Control address, a reference to an encapsulation transport format, a reference to an encapsulation protocol. According to an embodiment, the encapsulation transport format is Virtual Extensible Local Area Network, VxLAN. According to an embodiment, the encapsulation protocol is Generic Routing Encapsulation, GRE. According to an embodiment, the packet property is determined by the VNF instance implementing the packet classifier function, based on a configuration setting available to that VNF instance. According to a different embodiment, the packet property is determined by a VNF instance based on a configuration setting available to that VNF instance. According to an embodiment, the packet class identifier is inserted in one of: a Type of Service field in an IPv4 header, a flow label field in an IPv6 header, a physical network interface field, a logical network interface field, a Central Processing Unit thread or a process field, a Graphical Processing Unit thread or a process field. In this exemplary NS, packets with Cl1 travel from VNF1 to VNF2, VNF3 and VNF4, while packets with Cl2 travel from VNF1 to VNF2 and VNF4, while packets with Cl3 travel from VNF1 to VNF3 and to VNF4 before being output at NS CP9.

The CI can be coded in a few bits. For example, in an IPv4 network, it is possible to use the 'Type of Service' (ToS) field; for IPv6, the 'flow label' field may be used to code the CI.

In addition, some VNFs of an NS may be deployed with a special request of having to share a same compute node (made up of CPUs and GPUs, Graphical Process Unit). In such cases, the CI may be a CPU/GPU process identifier or CPU/GPU thread identifier.

It can thus be observed that the described method, which does not rely or Forwarders, may use very efficient packet transfer protocols to speed up VNF to VNF communication, especially when VNFs of an NS share a same compute node.

The described method enables the use of packet processing acceleration means like Data Plane Development Kit (DPDK) or Single-Root Input/Output Virtualization (SR-IOV). In such cases, the CI may be either a physical network port/interface identified by a harware identifier (e.g. PCI device address 0000:01:00.0) or a logical network interface (e.g. dpdk0).

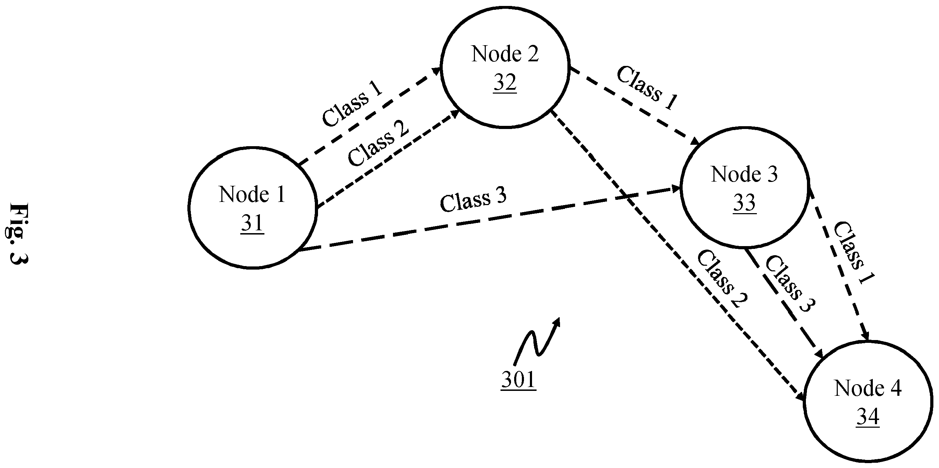

**Figure 3** is a Forwarding Graph **301** corresponding to NS **200,** and illustrates the VNFs VNF1, VNF2, VNF3 and VNF4 of figure 2 respectively as nodes 1 with reference **31,** node 2 with reference **32,** node 3 with reference **33** and node 4 with reference **34** and the packet paths between the nodes as edges.

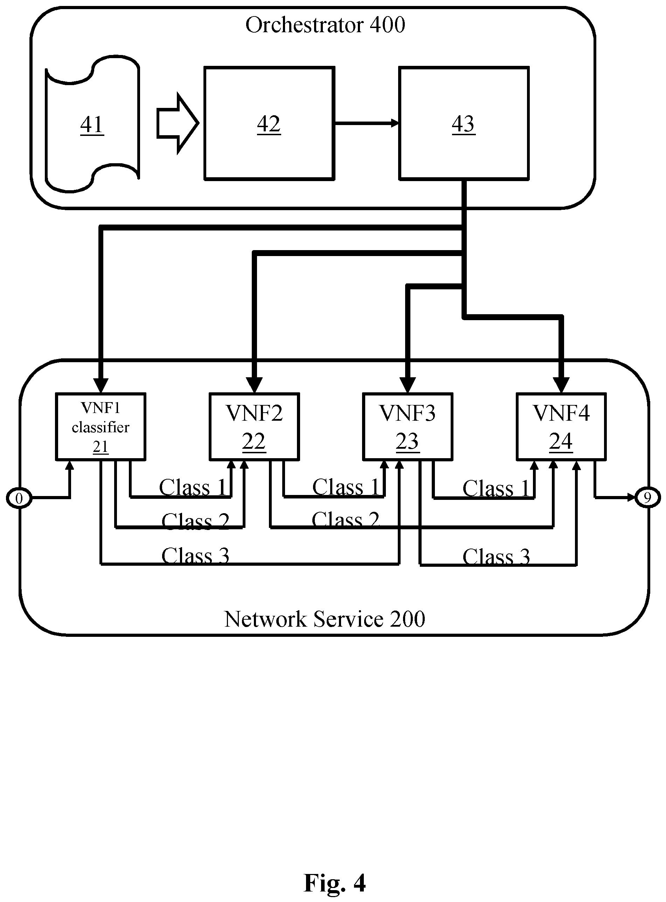

**Figure 4** depicts an Orchestrator **400** that processes a Forwarding Graph of a Network Service (e.g., NS **200**) and that outputs n Elementary Graphs or configuration data destined for each individual VNF in the NS. Now further building on what is explained with the help of figures 2 and 3, a Forwarding Graph *model* **41** may be defined which describes forwarding graph **301**. The FG model **41** includes a set of network function paths, each identified by a class identifier produced by the packet class identifier function, and which class identifier is inserted into particular packets by that function. This forwarding graph model **41** is used in a so-called Orchestrator **400** which includes a graph breakdown function **42** and a VNF configuration system **43.** The forwarding graph model **41** is fed into a graph breakdown function **42** which decomposes the forwarding graph model **301** into a set of elementary relationships between VNFs and neighboring VNFs. Graph breakdown function **42** may produce the following relationship data:
(class 1, VNF1, VNF2)
(class 1, VNF2, VNF3)
(class 1, VNF3, VNF4)
(class 2, VNF1, VNF2)
(class 2, VNF2, VNF4)
(class 3, VNF1, VNF3)
(class 3, VNF3, VNF4)

The above relationship data is input into a VNF configuration system **43** which transforms (splits) this data into data destined for each individual VNF so that the destination address of the packets going out of that VNF only depends on the packet class identifier. The destination address may be the IP address/port of a VNF, the destination Media Access Control (MAC) address, a reference (identifier of) to an encapsulation transport format like Virtual Extensible LAN (VxLAN), Generic Routing Encapsulation (GRE) protocol or any other type of overlay or underlay protocol/format, logical network interface field, a physical network interface field, a CPU thread or a process field, a GPU thread or a process field.

Given the example above, the VNF configuration system 43 would generate the following data:
Elementary graph data (VNFEG) for VNF1:
   - class 1 packets to be routed to VNF1, class 2 packets to be routed to VNF2, class 3 packets to be routed to VNF3
Elementary graph data for VNF2:
   - class 1 packets to VNF3, class 2 packets to VNF4
Elementary graph data for VNF3:
   - class 1 packets to VNF4, class 3 packets to VNF4
Elementary graph data for VNF4:
   - class 1/2/3 packets to CP9

Each of the elementary graphs for a VNF instance thus includes routing information for forwarding, by that VNF instance, packets output by that VNF instance based on packet class identifiers included in those packets. The elementary graph data is then transmitted to the VNFs, illustrated by thick arrows in figure 4. Elementary graph data for VNF1 is transmitted to VNF1, elementary graph data for VNF2 is transmitted to VNF2, elementary graph data for VNF3 is transmitted to VNF3, and elementary graph data for VNF4 is transmitted to VNF4.

The routing information for a VNF instance may include a specific configuration of the packet property that the VNF instance uses for forwarding a packet to another VNF instance. For example, VNF2 may insert the Packet Class Identifier in the IPv4 ToS when forwarding class 1 packets to VNF4, while it may use a process ID when forwarding class 1 packets to VNF3 (for example, when VNF2 and VNF3 are executed on a same CPU).

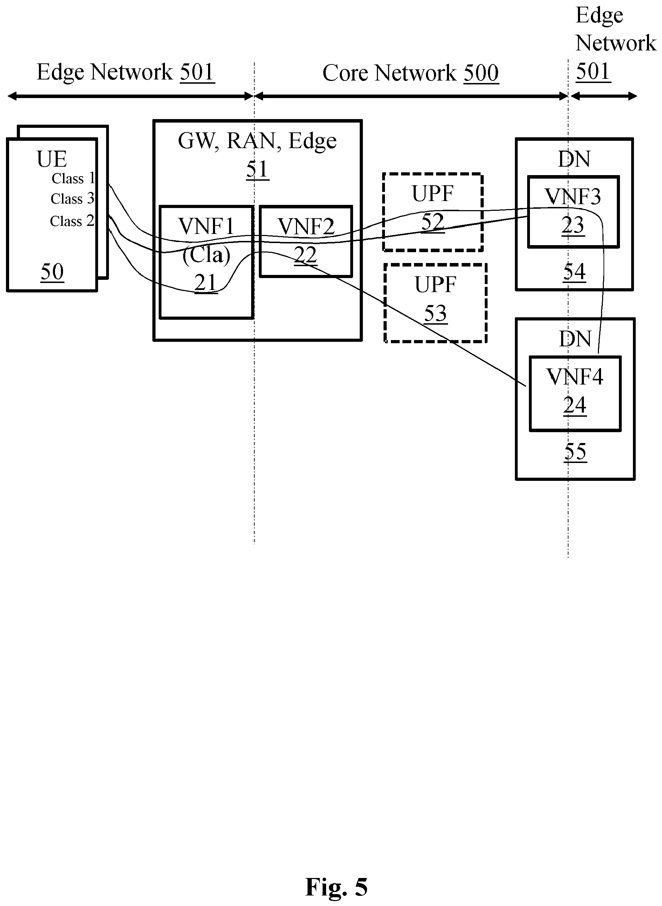

**Figure 5** is an exemplary deployment of the VNFs 1, 2, 3 and 4 corresponding to respectively references **21, 22, 23** and **24** in a network including a Core Network **500** and an edge network **501.** The VNF1 **(21),** implementing a classifier function, and VNF2 (**22**) are implemented in, for example, a gateway (GW), a Radio Access Network (RAN), or an Edge **51.** VNF3 (**23**) is implemented in a Data Network (DN) **54,** while VNF4 (**24**) is implemented in a DN **55.** Core Network (CN) **500** includes part of GW/RAN/Edge **51** to part of DNs **54, 55,** and optionally User Plane Functions (UPF) **52** and **53.** The Edge Network (EN) **501** includes plurality of User Equipments (UE) **50** and part of GW/RAN/Edge **51,** and part of DNs **54** and **55.** The curved lines indicate packet flows. A RAN **51** may be a Cloud RAN or Virtual RAN composed of a set of Base Band Units (BBUs) that serve a set of distant Remote Radio Heads (RRHs) from fronthaul communication links. A Fronthaul communication link separates a BBU from RRH at different communication layers L1/L2/L3. Identification means of the RRH ressource entering the BBU may be used as classifier identifier for VNF1 (**21**) to forward the output packets to VNF2 (**22**), VNF2' (another instance of VNF2, not shown in figure 5) or VNF3 (**23**). An Edge **51** may be any V2X (vehicle-to-everything) compute node for a road infrastructure such as Vehicle On-Board Unit or Equipment (OBU or OBE), Roadside Unit or Equipment (RSU or RSE), Safe Communication Channel. An Edge **51** may be an AR/VR/XR (Augmented, Virtual, Mixed Reality) Edge compute close to UE rendering to satisfy low latency constraints such as motion-to-photon latency. Edge **51** may be an Edge server located near or colocated with a RAN node serving Unnamed Aerial Vehicle (UAV), a Remotely Piloted Aircraft System (RPAS), Unmanned Aircraft System (UAS). For such cases, it may implement one or several VNFs for Image processing for example fire detection or dynamic object tracking. Edge **51** may be an enhanced Mobile Broadband unit such EMBB/5MBS or a CDN edge network delivery.

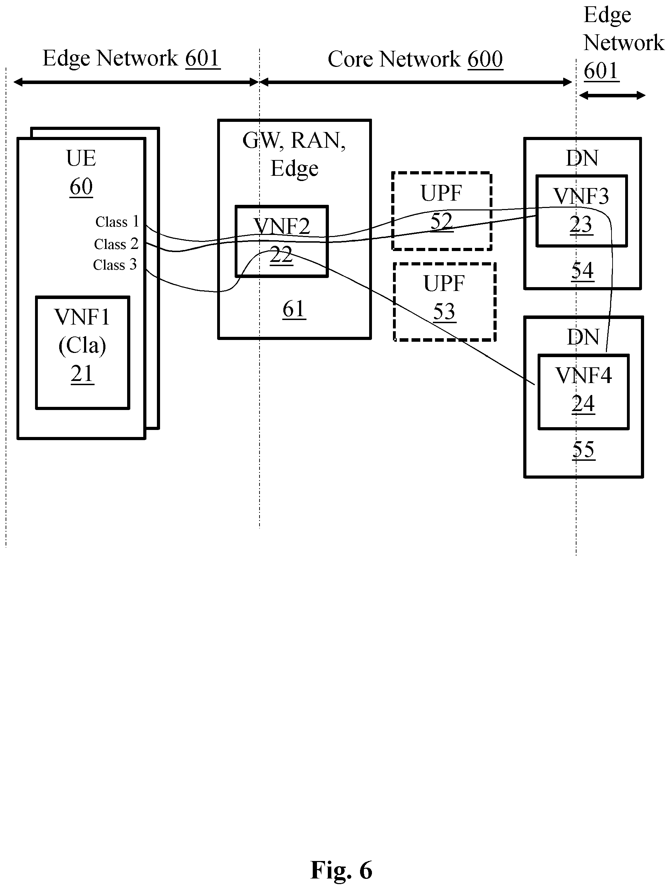

**Figure 6** is a different exemplary embodiment of VNFs 1-4 in a network. Here, an edge network **601** includes UEs **60**, part of GW/RAN/Edge **61**, part of DNs **54** and **55**. UEs **60** include the classifier VNF1 (**21**), while GW/RAN/Edge **61** now only includes VNF2 (**22**). The core network 600 includes part of GW/RAN/Edge **61**, optionally UPFs **52** and **53**, and part of DNs **54** and **55**. A UE may be a simple mobile phone, an AR/VR/XR User Equipment, an Unnamed Aerial Vehicle (UAV), a Remotely Piloted Aircraft System (RPAS), Unmanned Aircraft System (UAS), a Robot or a Car equipped with a strong computing power unit for processing many tasks before sending the packet to the edge. In such cases, a UE may comprise a set of several VNF inside (not represented in figure 6) for processing UE specific tasks requiring very low latencies or for security or privacy concerns. The UE can also perfom similar tasks or pre-procesing tasks for VNFs of Edge **61**.

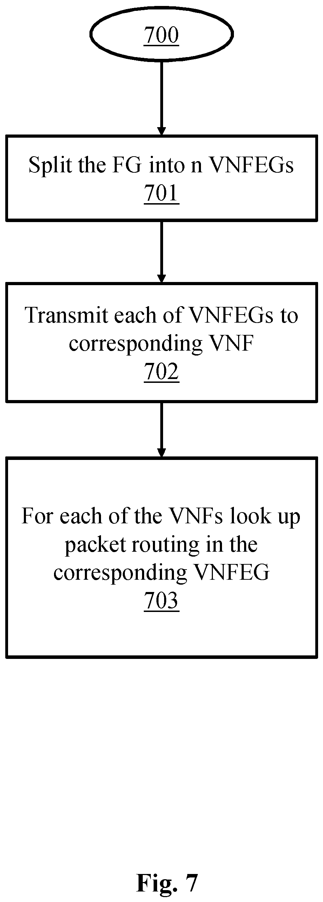

**Figure 7** is a flow chart of an embodiment of the method **700** for instantiating a network service described by a forwarding graph comprising Virtual Network Functions implemented by VNF instances according to the present principles. In **701,** the forwarding graph is decomposed (split) into *n* VNF elementary graphs (VNF EGs), one per VNF instance, each of the elementary graphs comprising routing information for forwarding, by the corresponding VNF instance, packets output (processed, handled) by that VNF instance, to the next VNF instance (or to the NS output CP) based on a packet class identifier comprised in the packet. In **702,** each of the VNF EGs is transmitted to the corresponding VNF instance for that elementary graph. In **703,** each of the VNF instances, when outputting a packet processed by it, transmits the packet to the next VNF instance, or to the NS output connection point, based on the packet class identifier comprised in the packet, using the information comprised in its elementary graph.

The proposed embodiments may among others be used within the context of ETSI/MANO (European Telecommunications Standards Institute / Management and Orchestration). Among the many use cases described in the ETSI/MANO project, the Mobile-Edge Computing (MEC) service shows a very complex Network Service, that bridges three major standardization works: ETSI/MANO, MEC, and 3GPP (including 4G and 5G). The embodiments described in the present document may help to reach the high data rates required by, notably, new 5G applications. MANO benefits include a capability to deploy applications on a heterogenous set of hosting infrastructures called Network Function Virtualization Infrastructure (NFVI) and is of particular interest for deploying MEC hosts, which are supposed to be executed on relatively small computing ressources located on the edge of the mobile network in a cloud like environment. In the MEC, each Mobile-Edge application (ME application) may comprise a set of VNFs, managed by MANO in another set of VNFs: the MEC orchestrator. Orchestrator 400 of figure 4 may be a MEC orchestrator, which would enable the MEC orchestrator to benefit from certain advantages, such as:
- no need to implement Forwarder functions in the NFVI, as each VNF sends itself the packets it has processed to the next VNF.
- No need to keep track 'states' in the form of indexes, as the relevant part of the forwarding graph for a VNF, i.e. an elementary graph, is stored in the VNF as configuration data. Indexing is useless, packet overhead is reduced.
- The system now being stateless, recovery from crash is easier and quicker.

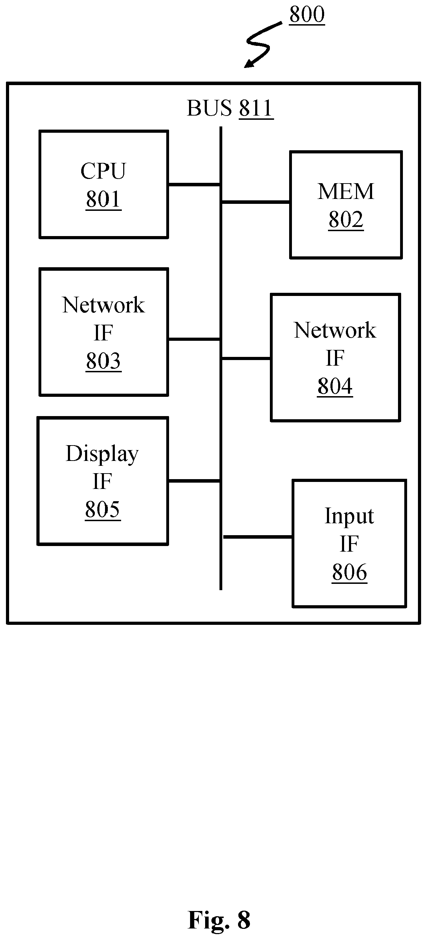

**Figure 8** is an embodiment of a device suitable for implementing embodiments per the principles of the present disclosure. The device **800** is for example an access point device, a gateway, or a mobile communication device. The device includes at least one processor or central processing unit or processor **801**, a memory **802**, a first network interface **803** for connection to a WLAN, for example of the IEEE802.11 (Wifi) type, and a second network interface **804** for connection **820** to another WLAN or a RAN, for example of the 3,4 or 5G (New Radio, NR) type. Device **800** may optionally comprise a display interface **805** and/or an input interface **806.** Display interface **805** and input interface **806** may be combined in a single unit. The elements **800-803** are interconnected via an internal data communication bus **811.** Memory **802** is configured to store machine readable instructions which can be executed by processor **801.** Device **800** is suitable for instantiating a Network Service described by a Forwarding Graph comprinsing Virtual Network Functions, VNF instances, interconnected via communication links. The at least one processor **801** is configured to split the forwarding graph into n VNF elementary graphs, one per VNF instance, wherein each of the elementary graphs for a VNF instance comprises routing information for forwarding, by the VNF instance, packets output by the VNF instance based on a packet class identifier comprised in the packets. The at least one processor **801** is further configured to transmit each of the VNF elementary graphs to a corresponding VNF instance for that elementary graph. Each of the VNF instances, when the VNF instance outputs a packet processed by the VNF instance, is configured to transmit, via one of the communication links, the packet to a next VNF instance based on the packet class identifier comprised in the packet.

It is to be appreciated that some elements in the drawings may not be used or be necessary in all embodiments. Some operations may be executed in parallel. Embodiments other than those illustrated and/or described are possible. For example, a device implementing the present principles may include a mix of hard- and software.

It is to be appreciated that aspects of the principles of the present disclosure can be embodied as a system, method or computer readable medium. Accordingly, aspects of the principles of the present disclosure can take the form of an entirely hardware embodiment, an entirely software embodiment (including firmware, resident software, micro-code and so forth), or an embodiment combining hardware and software aspects that can all generally be defined to herein as a "circuit", "module" or "system". Furthermore, aspects of the principles of the present disclosure can take the form of a computer readable storage medium. Any combination of one or more computer readable storage medium(s) can be utilized.

Thus, for example, it is to be appreciated that the diagrams presented herein represent conceptual views of illustrative system components and/or circuitry embodying the principles of the present disclosure. Similarly, it is to be appreciated that any flow charts, flow diagrams, state transition diagrams, pseudo code, and the like represent various processes which may be substantially represented in computer readable storage media and so executed by a computer or processor, whether such computer or processor is explicitly shown.

A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information there from. A computer readable storage medium can be, for example, but is not limited to, an electronic, magnetic, optical, electromagnetic, infrared, or semiconductor system, apparatus, or device, or any suitable combination of the foregoing. Some or all aspects of the storage medium may be remotely located (e.g., in the 'cloud'). It is to be appreciated that the following, while providing more specific examples of computer readable storage mediums to which the present principles can be applied, is merely an illustrative and not exhaustive listing, as is readily appreciated by one of ordinary skill in the art: a hard disk, a read-only memory (ROM), an erasable programmable read-only memory (EPROM or Flash memory), a portable compact disc read-only memory (CD-ROM), an optical storage device, a magnetic storage device, or any suitable combination of the foregoing.

## Claims

1. Method for instantiating a Network Service (200) described by a forwarding graph comprising Virtual Network Functions, VNF instances (21, 22, 23, 24), interconnected via communication links, comprising:
splitting (701) said forwarding graph into n VNF elementary graphs, one per VNF instance, wherein each of said elementary graphs for a VNF instance comprises routing information for forwarding, by said VNF instance, packets output by said VNF instance based on a packet class identifier comprised in said packets;
transmitting (702) each of said VNF elementary graphs to a corresponding VNF instance for that elementary graph; and
each of said VNF instances, when said VNF instance outputs a packet processed by said VNF instance, transmitting (703), via one of said communication links, said packet to a next VNF instance based on said packet class identifier comprised in said packet.

2. The method according to claim 1, wherein one of said VNF instances implements a packet classifier function, said packet classifier function inserting, into packets input into said Network Service, said packet class identifier, based on a packet property.

3. The method according to claim 2, wherein said packet property is at least one of a source address, a source port number, a destination address, a destination port number, a protocol identifier, a logical network interface identifier, a physical network interface identifier, a Central Processing Unit thread or process identifier, a Graphical Processing Unit thread or process identifier.

4. The method according to claim 3, wherein said packet property is determined by said VNF instances based on said routing information.

5. The method according to claim 4, wherein said destination address is any of an Internet Protocol address, a Media Access Control address, a reference to an encapsulation transport format, a reference to an encapsulation protocol.

6. The method according to claim 5, wherein said encapsulation transport format is Virtual Extensible Local Area Network, VxLAN.

7. The method according to claim 5, wherein said encapsulation protocol is Generic Routing Encapsulation, GRE.

8. The method according to any of claims 1 to 7 wherein said packet class identifier is inserted in one of: a Type of Service field in an IPv4 header; a flow label field in an IPv6 header; a physical network interface field, a logical network interface field, a Central Processing Unit thread or a process field, a Graphical Processing Unit thread or a process field.

9. A device (800) for instantiating a Network Service described by a forwarding graph comprinsing Virtual Network Functions, VNF instances, interconnected via communication links, said device comprising at least one processor (801) configured to:
split said forwarding graph into n VNF elementary graphs, one per VNF instance, wherein each of said elementary graphs for a VNF instance comprises routing information for forwarding, by said VNF instance, packets output by said VNF instance based on a packet class identifier comprised in said packets;
transmit each of said VNF elementary graphs to a corresponding VNF instance for that elementary graph; and
wherein each of said VNF instances, when the VNF instance outputs a packet processed by said VNF instance, is configured to transmit, via one of said communication links, said packet to a next VNF instance based on said packet class identifier comprised in said packet.

10. The device according to claim 9, wherein one of said VNF instances is configured to implement a packet classifier function, said packet classifier function inserting, into packets input into said Network Service said packet class identifier, based on a packet property.

11. The device according to claim 10, wherein said packet property is at least one of a source address, a source port number, a destination address, a destination port number, a protocol identifier, a physical network interface identifier, a logical network interface identifier, a Central Processing Unit thread or process identifier, a Graphical Processing Unit thread or process identifier.

12. The device according to claim 11, wherein said destination address is any of an Internet Protocol address, a Media Access Control address, a reference to an encapsulation transport format, a reference to an encapsulation protocol.

13. The device according to claim 12, wherein said encapsulation transport format is Virtual Extensible Local Area Network, VxLAN.

14. The device according to claim 12, wherein said encapsulation protocol is Generic Routing Encapsulation, GRE.

15. The device according to any of claims 9 to 14 wherein said packet class identifier is inserted in one of: a Type of Service field in an IPv4 header, a flow label field in an IPv6 header, physical network interface field, a logical network interface field, a Central Processing Unit thread or a process field, a Graphical Processing Unit thread or a process field.
